# EUROPEAN PATENT APPLICATION

(11) **EP 4 701 206 A1**
(43) Date of publication of application: **25.02.2026**
(21) Application number: 24791924.4
(22) Date of filing: 11.04.2024
(51) Int. Cl.: H04N 21/431

(54) **INTERFACE INTERACTION METHOD AND APPARATUS, DEVICE, AND STORAGE MEDIUM**

(30) Priority: 21.04.2023 CN 202310436627
(71) Applicant: Beijing Zitiao Network Technology Co., Ltd., Beijing 100190 (CN)
(72) Inventor: ZHANG, Tiantian, Beijing 100028 (CN); LAI, Zhiwen, Beijing 100028 (CN)
(74) Representative: Grünecker Patent- und Rechtsanwälte PartG mbB
(86) International application number: PCT/CN2024/087333
(87) International publication number: WO 2024/217339

(57) **Abstract**

Embodiments of the disclosure provide a method for interface interaction and a device, an apparatus and a storage medium. The method for interface interaction includes the following: presenting a preview interface for a live streaming room; in response to a trigger on a first control in the preview interface, switching from a preview interface to a live streaming interface that presents the live streaming room; and controlling a target function associated with the live streaming interface to be triggered, the target function determined based on the first control, the target function indicating an interactive interaction associated with a live streaming content of the live streaming room. Therefore, the manners of interaction for a user to switch from the preview interface to the live streaming interface are increased, the interestingness and efficiency of interface switching are improved, and the interactive experience of the user is further improved.

## Description

This application claims the priority of Chinese Patent Application No. 2023104366270 entitled "Method, Apparatus, Device, and Storage Medium for Interface Interaction" filed on April 21, 2023, which is incorporated herein by reference in its entirety.

### FIELD

Example embodiments of the present disclosure generally relate to the field of computers, and more particularly, to a method, apparatus, device, and computer-readable storage medium for interface interaction.

### BACKGROUND

With the development of computer technology, increasing applications can provide live streaming content. A variety of live streaming can provide people with contents in various aspects such as information, education, life and entertainment. In order to facilitate the audience user to know the live streaming content of the live streaming room before entering the live streaming room, a preview interface of the live streaming room is usually provided. The audience user may browse the preview interface of the live streaming room, enter the live streaming room after determining that he/she is interested in the live streaming room, and browse the live streaming interface of the live streaming room.

### SUMMARY

In a first aspect of the present disclosure, an interface interaction method is provided. The method includes the following steps: presenting a preview interface for a live streaming room; in response to a trigger on a first control in the preview interface, switching from the preview interface to a live streaming interface that presents the live streaming room; and controlling a target function associated with the live streaming interface to be triggered, where the target function is determined based on the first control, and the target function indicates an interactive interaction associated with the live streaming content of the live streaming room.

In a second aspect of the present disclosure, an interface interaction method is provided. The method includes the following steps: presenting a preview interface for a live streaming room; based at least on a comparison between the viewing duration of the preview interface and a threshold, presenting guidance information associated with entering the live streaming room; and in response to not receiving a predetermined operation associated with the guidance information within a preset time period, switching from the preview interface to a live streaming interface that presents the live streaming room.

In a third aspect of the present disclosure, an apparatus for interface interaction is provided. The apparatus includes a first interface presenting module configured to present a preview interface for a live streaming room; a first interface switching module configured to switch from a preview interface to a live streaming interface that presents the live streaming room in response to a trigger on a first control in the preview interface; and a target function triggering module configured to control a target function associated with the live streaming interface to be triggered, the target function determined based on the first control.

In a fourth aspect of the present disclosure, an apparatus for interface interaction is provided. The apparatus includes a second interface presenting module configured to present a preview interface for a live streaming room, a guidance information presenting module configured to present guidance information associated with entering the live streaming room at least based on the comparison between the viewing duration of the preview interface and a threshold; and a second interface switching module configured to switch from the preview interface to a live streaming interface that presents the live streaming room in response to not receiving a predetermined operation associated with the guidance information within a preset time period.

In a fifth aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method according to the first aspect or the second aspect.

In a sixth aspect of the present disclosure, a computer-readable storage medium is provided. The computer-readable storage medium stores a computer program thereon, and the computer program is executable by the processor to implement the method according to the first aspect or the second aspect.

It should be understood that the content described in this content section is not intended to limit the essential feature(s) or important feature(s) of the embodiments of the present disclosure, nor is it intended to limit the scope of the present disclosure. Other features of the present disclosure will become readily comprehensible from the following description.

### BRIEF DESCRIPTION OF DRAWINGS

The above and other features, advantages, and aspects of various embodiments of the present disclosure will become more apparent from the following detailed description with reference to the accompanying drawings. In the drawings, the same or similar reference numbers refer to the same or similar elements, where:
FIG. 1 illustrates a schematic diagram of an example environment in which embodiments of the present disclosure can be implemented;
FIG. 2A illustrates an example preview interface according to some embodiments of the present disclosure;
FIG. 2B illustrates an example live streaming interface according to some embodiments of the present disclosure;
FIGS. 2C, 2D, 2E, and 2F illustrate schematic diagrams of interface interactions according to some embodiments of the present disclosure;
FIGS. 3A, 3B, and 3C illustrate an example preview interface according to further embodiments of the present disclosure;
FIG. 4 shows a flowchart of a process for interface interaction according to some embodiments of the present disclosure;
FIG. 5 shows a flowchart of a process for interface interaction according to some embodiments of the present disclosure;
FIG. 6 is a schematic structural block diagram of an apparatus for interface interaction according to some embodiments of the present disclosure;
FIG. 7 illustrates a schematic structural block diagram of an apparatus for interface interaction according to some embodiments of the present disclosure; and
FIG. 8 illustrates a block diagram of a device capable of implementing multiple embodiments of the present disclosure.

### DETAILED DESCRIPTION

Embodiments of the present disclosure will be described in more detail below with reference to the accompanying drawings. While some embodiments of the present disclosure are shown in the accompanying drawings, it should be understood that the present disclosure may be implemented in various forms and should not be construed as limited to the embodiments set forth herein, on the contrary, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout this document and any type of embodiments may be included in any section/subsection. Furthermore, the embodiments described in any section/subsection may be combined with any other embodiment described in the same and/or different section/subsection(s) in any manner.

In the description of the embodiments of the present disclosure, term "include", and the like should be interpreted as open-ended "include", i.e., "include but not limited to". Term "based on" should be interpreted as "based at least in part on". Term "one embodiment" or "the embodiment" should be interpreted as "at least one embodiment". Term "some embodiments" should be interpreted as "at least some embodiments". Other explicit and implicit definitions may also be included hereinafter. Terms "first," "second," and the like may refer to different or identical objects. Other explicit and implicit definitions may also be included hereinafter.

Embodiments of the present disclosure may relate to data of a user, acquisition and/or use of data, and the like. These aspects all follow the corresponding laws and regulations and related stipulations. In embodiments of the present disclosure, collecting, obtaining, handling, processing, forwarding, or using, etc. of all data is performed on the premise that the user knows and confirms it. Accordingly, when implementing various embodiments of the present disclosure, types, usage range, usage scenario, and the like of the data or information that may be involved should be notified to the user and obtain the authorization of the user in an appropriate manner according to the relevant laws and regulations. The specific manner of notification and/or authorization may vary according to actual situations and application scenarios, and the scope of the present disclosure is not limited in this respect.

According to the solutions in the present specification and the embodiments, if personal information processing is involved, the processing will be performed on the premise of having a legal basis (for example, obtaining consent of the subject of the personal information, or indispensable for fulfilling a contract), and performed only within a specified or agreed range. User's rejection of processing of personal information other than necessary information required by basic function does not affect the usage of basic function by the user.

As mentioned briefly above, in order to facilitate the user to know live streaming content of a live streaming room before entering the live streaming room, a preview interface of the live streaming room is usually provided additionally. The user may browse the preview interface of the live streaming room, enter the live streaming room after determining that he/she is interested in the live streaming room, and browse the live streaming interface of the live streaming room.

Conventionally, an electronic device may switch from a preview interface to a live streaming interface presenting a live streaming room in response to receiving a touch operation on a browsing interface, and the interface switching manner is single. In addition, conventional preview interface does not include a control for interaction, the audience user cannot interact with the anchor user in the preview interface, and the audience user can interact with the anchor user through the interaction control in the live streaming interface only after switching to the live streaming interface, which leads to poor user interaction experience.

Embodiments of the present disclosure provide a solution for interface interaction. Various example implementations of the solution are further described in detail below in combination with the accompanying drawings. In order to explain the principles and concepts of the embodiments of the present disclosure, some descriptions below will refer to the field of live streaming. It will be understood, however, that this is merely example and is not intended to limit the scope of the present disclosure in any way. Embodiment of the present disclosure can be applied to the fields of various types of content sharing, video watching, shopping and the like.

### Example environment

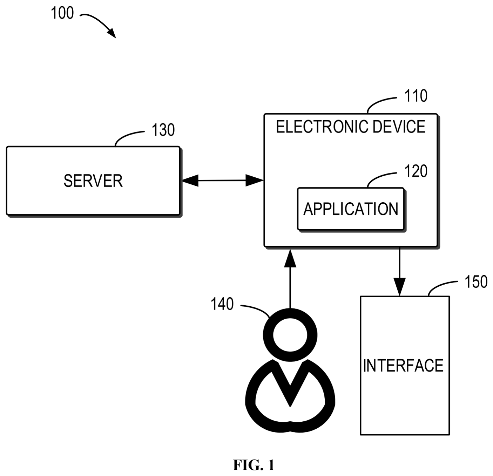

FIG. 1 illustrates a schematic diagram of an example environment 100 in which embodiments of the present disclosure can be implemented. In this example environment 100, an application 120 is installed in an electronic device 110. User 140 may interact with the application 120 via the electronic device 110 and/or its attached equipment. The application 120 may be a social application, a content sharing application, a shopping application, or any other suitable application.

In environment 100 of FIG. 1, if an application 120 is active, the electronic device 110 may present an interface 150 of the application 120. The interface 150 may include various interfaces that can be provided by the application 120, such as a live streaming interface of a live streaming room. For example, a social application may display live streaming interfaces of different live streaming rooms, and the audience user may variously interact with the anchor user through the interface.

In some embodiments, the electronic device 110 communicates with the server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio streaming receiver, an electronic book device, a gaming device, or any combination thereof, including accessories and peripherals of these devices, or any combination thereof. In some embodiments, the electronic device 110 can also support any type of interface for a user (such as a "wearable" circuit, etc.). The server 130 may be various types of computing systems/servers capable of providing computing ability, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

Description of some example embodiments of the present disclosure will continue below with reference to the accompanying drawings.

### Example interface

In order to more intuitively represent the interaction mechanism of the interface, live streaming scene will be described as an example, and embodiments of the present disclosure may enable the user to understand the corresponding principle of picture display by presenting an example interface.

### Example scenario one

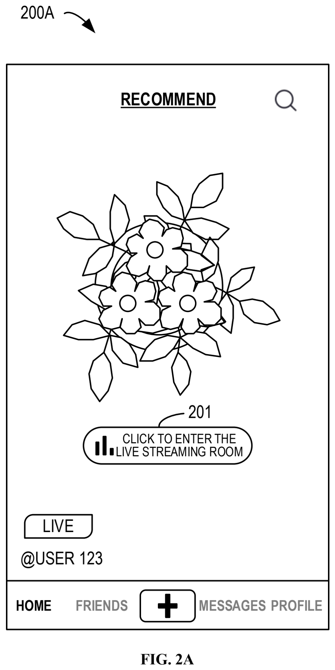

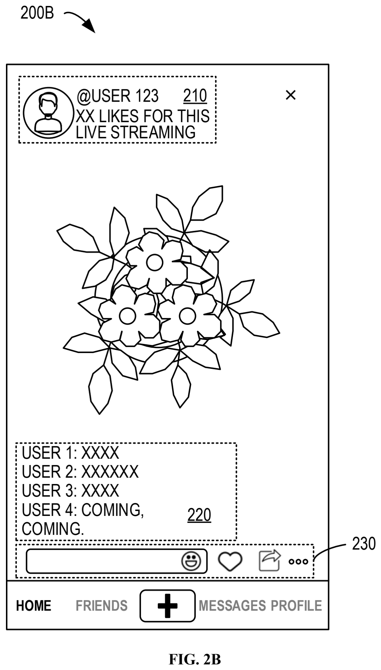

FIG. 2A illustrates an example preview interface 200A in accordance with some embodiments of the present disclosure. As shown in FIG. 2A, the preview interface 200A may present information of the anchor user (for example, a name of the anchor user), a picture (for example, a live streaming picture) associated with the anchor user, and guidance information 201. In some embodiments, the electronic device 110 may switch from the preview interface 200A to the live streaming interface 200B that presents the live streaming room shown in FIG. 2B in response to receiving a touch operation in the preview interface 200A, or in response to receiving a touch operation on the guidance information 201. The touch operation may be, for example, a click operation, a double-click operation, a long-press operation, a sliding operation, or the like.

As shown in FIG. 2B, the live streaming interface 200B may present a picture (that is, a live streaming picture) associated with the anchor user. The live streaming interface 200B may also include a plurality of display areas. The area 210 may present information associated with the anchor user, and the information includes, but is not limited to, a name of the anchor user, an identifier of the anchor user (for example, an avatar of the anchor user), and the like. In some embodiments, the area 210 may also present relevant information of the live streaming room, for example, may present the number of likes of the live streaming room.

The area 220 may present comment information of the live streaming room. Since area 220 is limited in size, in some embodiments only a part of comment information is presented in area 220. For example, the area 220 may, for example, present recently published part of comment information. In some embodiments, the electronic device 110 may present more comment information in response to receiving a slide-up operation at the area 220.

Area 230 may present an interactive control. The electronic device 110 may trigger a function corresponding to the interactive control in response to receiving a touch operation on the interactive control. The interaction control includes, but is not limited to, a comment control, a like control, a gift giving control, a forwarding control, and the like, and the embodiments of the present disclosure are not limited in this aspect. For example, the electronic device 110 may trigger a like function in the live streaming interface 200B in response to receiving a touch operation on the like control.

Since the interface interaction manner in which a touch operation in the preview interface 200A or the guidance information 201 is performed to trigger interface switching is relatively single, interface interaction experience is poor for the user. To solve this problem, embodiments of the present disclosure also present a first control in the preview interface. The electronic device 110 may switch from the preview interface to the live streaming interface that presents the live streaming room in response to a trigger on the first control in the preview interface.

In some embodiments, the electronic device 110 may directly present the first control in the preview interface while presenting the preview interface. In some other embodiments, in order to prevent interface switching caused by audience user's unintended touch, the electronic device 110 may present the first control in the preview interface based on the comparison between the viewing duration of the preview interface and the threshold. Specifically, the electronic device 110 may determine the viewing duration of the preview interface in real time, compare the viewing duration with a predetermined threshold, and further present the first control in the preview interface when the viewing duration reaches the threshold. The threshold herein may be preset by the user and input to the electronic device 110 or may be determined by the electronic device 110 itself based on historical interface interaction situations. For example, if the threshold is 10 seconds, the electronic device 110 may not present the first control in the preview interface in response to the viewing duration of the preview interface less than 10 seconds and present the first control in the preview interface in response to the viewing duration of the preview interface reaching 10 seconds.

Further, after the electronic device 110 presents the first control in the preview interface, the electronic device 110 switches from the preview interface to the live streaming interface that presents the live streaming room in response to a trigger on the first control in the preview interface and controls a target function associated with the live streaming interface to be triggered.

In some embodiments, the target function associated with the live streaming interface may indicate an interactive interaction associated with the live streaming content of the live streaming room. Such interactive interactions may include, for example, comments, likes, virtual gifts, and the like for live streaming content. In another embodiment, the target function associated with the live streaming interface may also indicate, for example, a function associated with the live streamer of the live streaming room, for example, following the live streamer, sending a private message to the live streamer, and the like.

In some embodiments, the target function is determined based on the first control, which may correspond to a second control in the live streaming interface. Therefore, both the first control and the second control may be configured to trigger the target function, and the electronic device 110 may further control the target function in the live streaming interface to be triggered in response to receiving a trigger on the second control in the live streaming interface. It should be noted that the target function is a function only for the live streaming interface, and after receiving the trigger on the first control in the preview interface, the electronic device 110 switches to the live streaming interface, and triggers a corresponding target function in the live streaming interface.

In some embodiments, the first control has a display style corresponding to the second control. For example, the first control may have the same display style as the second control. The display style may include, for example, identification, color, size, and the like. For example, the first control may also have a different display style from the second control, that is, although both the first control and the second control can be used to trigger the target function, their display styles may not be exactly the same. For example, the size of the first control is different from the size of the second control. In some embodiments, a first display position of the first control in the preview interface corresponds to a second display position of the second control in the live streaming interface. For example, the first display position of the first control in the preview interface and the second display position of the second control in the live streaming interface may be the same position.

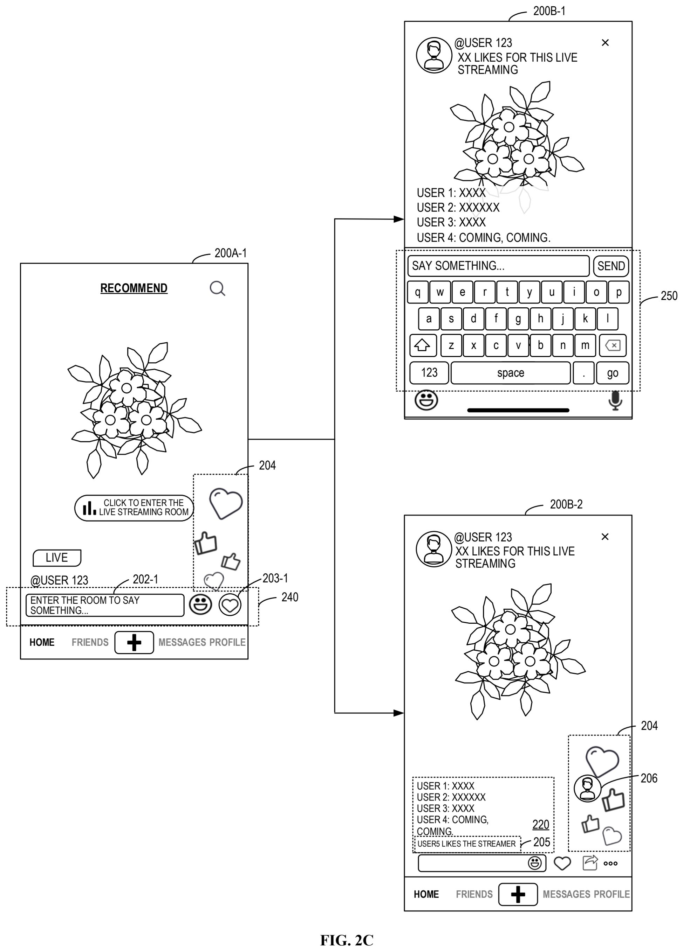

Taking the first control including a comment control and a like control as an example, the electronic device 110 may switch from the preview interface to the live streaming interface that presents the live streaming room in response to a trigger on the comment control in the preview interface, and trigger a comment function in the live streaming interface. The electronic device 110 may switch from the preview interface to the live streaming interface that presents the live streaming room in response to a trigger on the like control in the preview interface, and trigger a like function in the live streaming interface. FIG. 2C illustrates a schematic diagram of an interface interaction according to some embodiments of the present disclosure. As shown in FIG. 2C, the preview interface 200A-1 includes a control presentation area 240 for presenting a first control. The control presentation area 240 includes a comment control 202-1 and a like control 203-1. In order to further improve the display effect of the preview interface 200A-1, a like special effect 204 is also presented in the preview interface 200A-1. The electronic device 110 may present the live streaming interface 200B-1 in response to a trigger on the comment control 202-1 and present the comment input area 250 when a comment function of the live streaming interface 200B-1 is triggered. The electronic device 110 may present the live streaming interface 200B-2 in response to the trigger on the like control 203-1, present the like information 205 (that is, user 5 likes the anchor) of the current user to the live streaming room in the area 220 when the like function of the live streaming interface 200B-2 is triggered, and present the user identifier of the current user (for example, a user avatar 206 of the current user) in the like special effect 204.

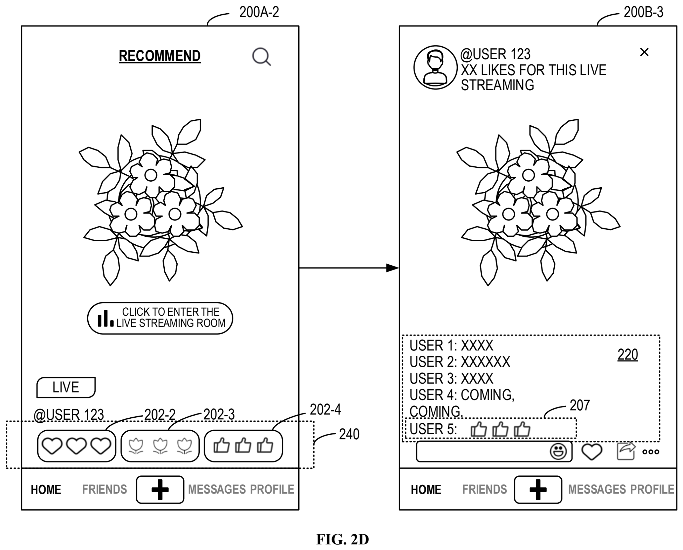

In some embodiments, in order to simplify the manner in which the interface interaction is performed through the comment control to switch to the live streaming interface, the first control in the preview interface includes a comment control (also referred to as a first comment control) for generating the predetermined comment content. The comment control for generating the predetermined comment content may be displayed with predetermined comment content. The predetermined comment content may be predetermined by the user or may be generated automatically by the electronic device 110 based on historical comment information. The electronic device 110 may switch to the live streaming interface and send the predetermined comment content in the live streaming interface in response to receiving a trigger on the comment control for generating the predetermined comment content. As shown in FIG. 2D, the control presentation area 240 of the preview interface 200A -2 includes comment controls 202-2, 202-3, and 202-4 for generating predetermined comment content. The electronic device 110 may switch to the live streaming interface 200B-3 in response to the trigger on the comment control 202-4 and present the comment 207 corresponding to the predetermined comment content in the live streaming interface 200B-3.

In some embodiments, the first control of the preview interface further presents a target content that indicates interaction information in the live streaming room. The interaction information may include, for example, at least one of comment information, like information, or gift information. The target content may be static or dynamic, where the dynamic content may correspond to real-time interaction information in the live streaming room.

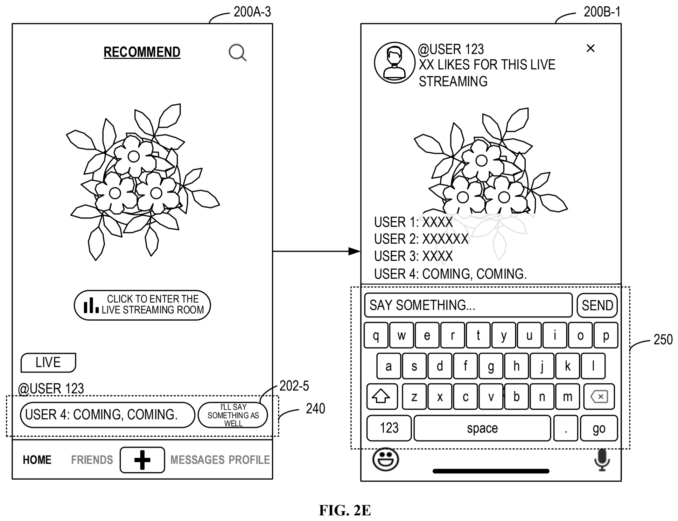

In some embodiments, the real-time interaction information in the live streaming room may be, for example, real-time comment information. As shown in FIG. 2E, the control presentation area 240 of the preview interface 200A-3 includes a comment control 202-5 (also referred to as "a second comment control") that is presented with a target content indicating the real-time comment information in the live streaming room (i.e., "user 4: coming, coming" as shown in the figure). In some embodiments, in a case where there are many audience users and a lot of comment information in the live streaming room, in order to avoid too fast update speed of the comment information displayed in the preview interface, the electronic device 110 may randomly select one from a plurality of pieces of real-time comment information regularly to present it at the comment control 202-5 of the preview interface. The electronic device 110 may switch to the live streaming interface 200B-1 in response to a trigger on the comment control 202-5. In the live streaming interface 200B-1, the real-time comment information may be presented. Additionally, the comment function in the live streaming interface 200B-1 may also be triggered to present a comment panel 250 for interacting with the live streaming content. Accordingly, the user may input a comment content in the comment panel 250.

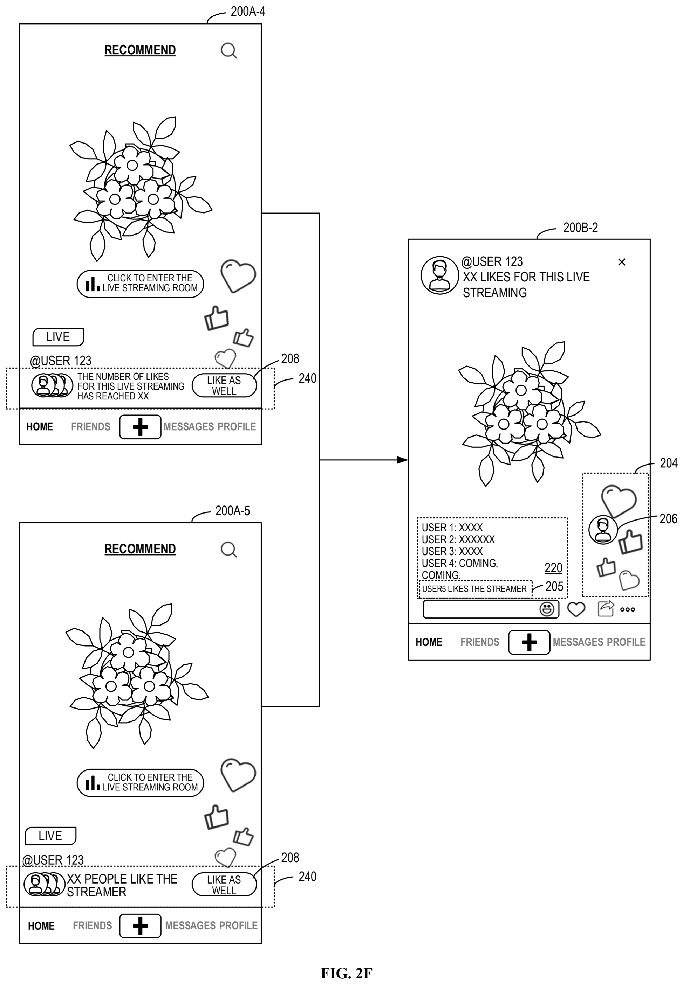

In some embodiments, the real-time interaction information in the live streaming room may also be real-time like information, for example. As shown in FIG. 2F, the control presentation area 240 of the preview interface 200A-4 and the preview interface 200A-5 includes a like control 208 that is presented with a target content that indicates real-time like information (that is, the "the number of likes has reached 6.80,000 in the present live streaming" and "98 persons are thumbing up the anchor" as shown in the figure) in the live streaming room. In order to attract the audience user's interest in the live streaming room so that more audience users can be attracted to enter the live streaming room for viewing, the electronic device 110 may determine which one of a preview interface 200A-4 or a preview interface 200A-5 will be presented based on real-time like information. Specifically, when the total number of likes is greater than a preset number, the electronic device 110 may present the preview interface 200A-4 including the total number of likes. When the total number of likes is small but the number of persons that thumb up in real time is large, the electronic device 110 may present the preview interface 200A-5 including the number of persons that thumb up in real time. The electronic device 110 may present the live streaming interface 200B-2 in response to the trigger on the like control 208, present like information 205 (that is, user 5 thumbs up the anchor) of the current user to the live streaming room in the area 220 when the like function of the live streaming interface 200B-2 is triggered, and present a user identifier of the current user (for example, a user avatar 206 of the current user) in the like special effect 204.

In some embodiments, in order to avoid the waste of power consumption caused by presenting the first control in the live streaming room that the user is not interested in multiple times, the electronic device 110 may present the first control only for once in the preview interface corresponding to each live streaming room within the first time period. The first time period may be preset by the user or may be determined by the electronic device 110 itself. The first time period may be, for example, 1 hour. For example, if the audience user performs a predetermined operation on the preview interface to switch to another interface irrelevant to the live streaming room, the electronic device 110 will not present the first control when subsequently presenting the preview interface of the live streaming room again.

In some embodiments, the electronic device 110 may further perform frequency control on the display times of the first control. Specifically, for the same live streaming room, if the electronic device 110 has not received the trigger of the current user on the first control for successive two times, the electronic device 110 may control all the preview interfaces corresponding to the live streaming room to not present the first control for the current user in a second time period. The second time period may be preset by the user or may be determined by the electronic device 110 itself. The second time period may be, for example, 7 days. In some embodiments, after the second time period is reached and the first control is re-presented, the electronic device 110 may further control the preview interface corresponding to the live streaming room to not present the first control for the current user in the third time period in response to that the trigger of the current user on the first control has not been received for successive two times. The third time period is greater than the second time period, and similarly to the second time period, the third time period may be preset by the user or may be determined by the electronic device 110 itself. The third time period may be, for example, 30 days. In this way, the number of times of displaying the first control of the live streaming room which the user is not interested in can be reduced, the interface interaction experience of the user can be improved, and the power consumption of the device can be reduced.

With reference to the plurality of embodiments described above in FIG. 2A to FIG. 2F, the electronic device 110 may present the first control in the preview interface, and switch to the live streaming interface that presents the live streaming room in response to receiving a trigger on the first control. The electronic device 110 controls to trigger a target function associated with the first control and associated with the live streaming interface. In this way, the number of interaction manners for a user to switch to the live streaming interface via the preview interface can be increased, the interestingness of interface switching can be improved, and in turn, the interactive experience of the user can be improved.

It should be understood that the specific numerical values and specific contents in the interface mentioned in the above example scenarios are merely illustrative and are not intended to limit the present disclosure.

### Example scenario two

In some embodiments, in addition to presenting a first control and receiving a trigger on the first control, the electronic device 110 may also present guidance information associated with entering the live streaming room.

The electronic device 110 may present a preview interface for the live streaming room, and present, based at least on a comparison between the viewing duration of the preview interface and a threshold, guidance information associated with entering the live streaming room. Specifically, the electronic device 110 may determine the viewing duration of the preview interface in real time, compare the viewing duration with a predetermined threshold, and further present the guidance information associated with entering the live streaming room when the viewing duration reaches the threshold. The threshold herein may be preset and input to the electronic device 110 by the user or may be determined by the electronic device 110 itself based on historical interface interaction situations. For example, if the threshold is 10 seconds, the electronic device 110 may not present the guidance information in the preview interface in response to the viewing duration of the preview interface less than 10 seconds and present the guidance information in the preview interface in response to the viewing duration of the preview interface reaching 10 seconds.

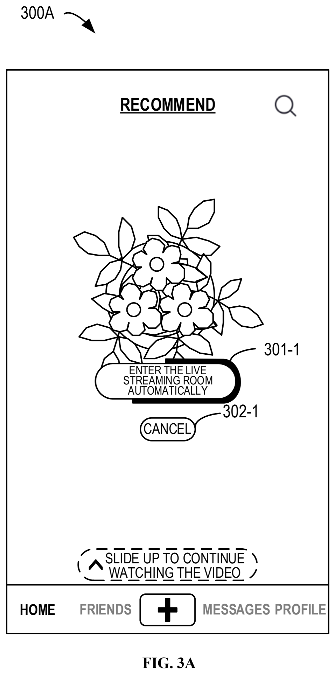

In response to not receiving the predetermined operation associated with the guidance information within the preset time period, the electronic device 110 switches from the preview interface to the live streaming interface that presents the live streaming room. In some embodiments, by default, the electronic device 110 directly switches to present the live streaming interface in response to reaching the preset time period without receiving the predetermined operation associated with the guidance information. In order to prompt the user for the remaining time of the preset time period, the guidance information associated with entering the live streaming room presented by the electronic device 110 may include, for example, a progress control for indicating the remaining time of the preset time period. The progress control may present a specific value of the remaining time or may also present a proportion of the remaining time in the preset time period. The guidance information associated with the entering the live streaming room presented by the electronic device 110 may also include, for example, a cancel control. The electronic device 110 may stop presenting the guidance information in response to a trigger on the cancel control to prevent a switch from the preview interface to the live streaming interface. FIG. 3A illustrates an example preview interface 300A in accordance with some other embodiments of the present disclosure. As shown in FIG. 3A, a preview interface 300A is presented with a guidance information 301-1 including a progress control and a cancel control 302-1. The progress control of the guidance information 301-1 may indicate the remaining time in a progress bar, and the electronic device 110 may decrease the length of the progress bar as the remaining time decreases.

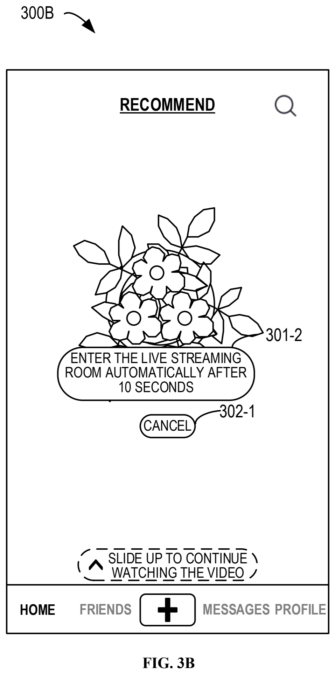

In some embodiments, to highlight the remaining time, the electronic device 110 may directly present the remaining time in the guidance information. As shown in FIG. 3B, the preview interface 300B directly presents guidance information 301-2 including the remaining time and the cancel control 302-1. The guidance information 301-2 presents the remaining time (10s) in text.

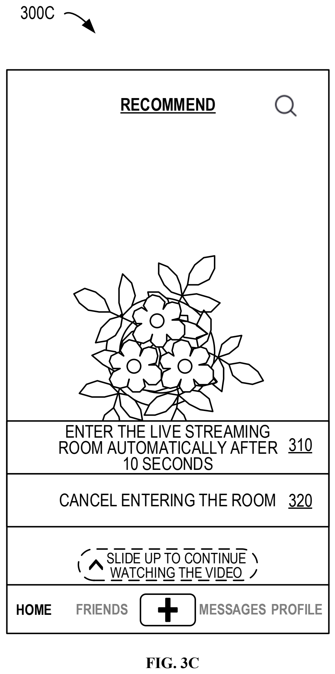

In some embodiments, in order to facilitate the user to stop the interface switching in time, the electronic device 110 may directly present a cancel area with the same function as the cancel control. As shown in FIG. 3C, the preview interface 300C includes a guidance area 310 and a cancel area 320. The guidance area 310 may present the remaining time of the preset period. The electronic device 110 may stop presenting the guidance information in response to receiving a trigger on the cancel area 320 to prevent a switch from the preview interface to the live streaming interface.

In some embodiments, the guidance information may further include a first control, the electronic device 110 may switch from the preview interface to the live streaming interface that presents the live streaming room in response to a trigger on the first control in the preview interface, and control a target function associated with the live streaming interface to be triggered, where the target function is determined based on the first control. The interface interaction manner associated with the first control has been described in detail above with reference to FIG. 2C to FIG. 2F, which will not be described herein again.

In some embodiments, to avoid the waste of power consumption caused by presenting guidance information in the live streaming room which the user is not interested in for multiple times, the electronic device 110 may present the guidance information only once in the preview interface corresponding to each live streaming room within a fourth time period. The fourth time period may be preset by the user or may be determined by the electronic device 110 itself. The fourth time period may be, for example, 1 hour. For example, if the audience user triggers a cancel control in the preview interface, or performs a predetermined operation on the preview interface to switch to another interface irrelevant to the live streaming room, the electronic device 110 will not present the guidance information when the preview interface of the live streaming room is presented again in a subsequent fourth time period. In this way, the number of times of displaying the guidance information of the live streaming room that the user is not interested in can be reduced, the interface interaction experience of the user can be improved, and the power consumption of the device can be reduced.

With reference to the plurality of embodiments described above in FIG. 3A to FIG. 3C, the electronic device 110 may present, based on a comparison between the viewing duration of the preview interface and a threshold, the guidance information associated with entering the live streaming room, and switch to that presents the live streaming interface in response to not receiving a predetermined operation associated with the guidance information. In this way, the interface switching efficiency can be improved, and in turn, the user interaction experience can be improved.

It should be understood that the specific numerical values and specific contents in the interface mentioned in the above example scenarios are merely illustrative and are not intended to limit the present disclosure.

### Example processes

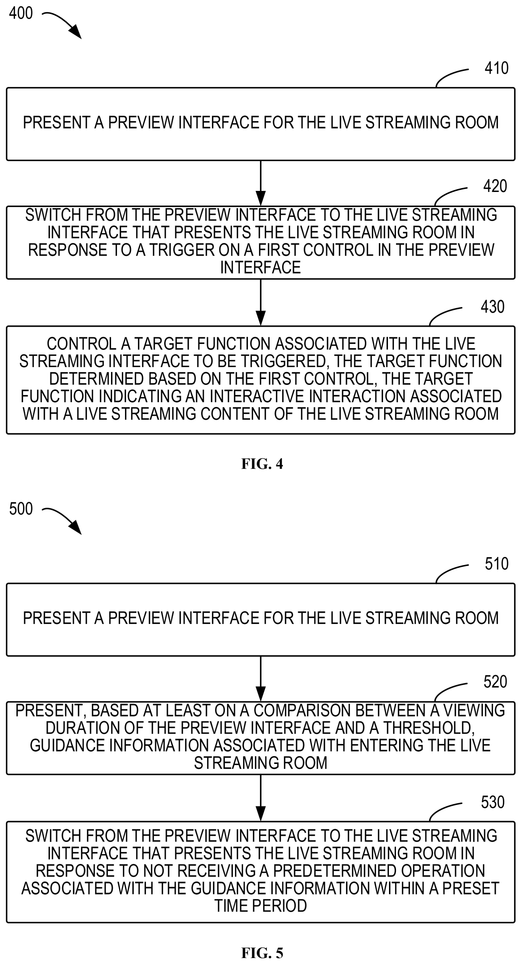

FIG. 4 shows a flowchart of a process 400 for interface interaction according to some embodiments of the present disclosure. Process 400 may be implemented at electronic device 110. The process 400 is described below with reference to FIG. 1.

In block 410, the electronic device 110 presents a preview interface for the live streaming room.

In block 420, the electronic device 110 switches from the preview interface to the live streaming interface that presents the live streaming room in response to a trigger on a first control in the preview interface.

In block 430, the electronic device 110 controls a target function associated with the live streaming interface to be triggered, the target function determined based on the first control, the target function indicating an interactive interaction associated with a live streaming content of the live streaming room.

In some embodiments, the process 400 further includes: presenting a first control in the preview interface based on a comparison between a viewing duration of the preview interface and a threshold.

In some embodiments, the target function corresponds to a second control in the live streaming interface.

In some embodiments, the first control has a display style corresponding to the second control; and/or a first display position of the first control in the preview interface corresponds to a second display position of the second control in the live streaming interface.

In some embodiments, the first control is presented with a target content, and the target content is used to indicate interaction information in the live streaming room.

In some embodiments, the interaction information includes at least one of the following information of the live streaming room: comment information, like information, or gift information; and/or the target content includes dynamic content, and the dynamic content corresponds to real-time interaction information in the live streaming room.

In some embodiments, the first control includes a first comment control for generating a predetermined comment content.

In some embodiments, controlling the target function associated with the live streaming interface to be triggered includes: presenting, in the live streaming interface, a comment corresponding to the predetermined comment content.

In some embodiments, the first control includes a second comment control, and controlling the target function associated with the live streaming interface to be triggered includes: presenting, in the live streaming interface, a comment panel for interacting with the live streaming content.

FIG. 5 shows a flowchart of a process 500 for display control according to some embodiments of the present disclosure. Process 500 may be implemented at electronic device 110. The process 500 is described below with reference to FIG. 1.

In block 510, the electronic device 110 presents a preview interface for the live streaming room.

In block 520, the electronic device 110 presents, based at least on a comparison between a viewing duration of the preview interface and a threshold, guidance information associated with entering the live streaming room.

In block 530, the electronic device 110 switches from the preview interface to the live streaming interface that presents the live streaming room in response to not receiving a predetermined operation associated with the guidance information within a preset time period.

In some embodiments, the guidance information includes a progress control, and the progress control is used to indicate a remaining time of the preset time period.

In some embodiments, the guidance information further includes a cancel control, and the process 500 further includes: in response to a trigger on the cancel control, stopping presenting the guidance information to prevent a switch from the preview interface to the live streaming interface.

In some embodiments, presenting the guidance information associated with entering the live streaming room includes: presenting the guidance information associated with entering the live streaming room in response to a viewing duration of the preview interface reaching a threshold.

In some embodiments, the guidance information includes a first control, and the process 500 further includes: in response to a trigger on the first control in the preview interface, switching from the preview interface to the live streaming interface that presents the live streaming room; and controlling a target function associated with the live streaming interface to be triggered, the target function determined based on the first control.

### Example device and apparatus

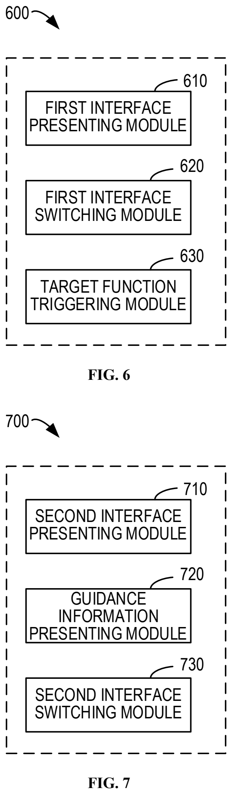

Embodiments of the present disclosure also provide a corresponding apparatus for implementing the above method or process. FIG. 6 illustrates a schematic structural block diagram of an apparatus 600 for interface interaction according to some embodiments of the present disclosure. The apparatus 600 may be implemented or included in the electronic device 110. The various modules/components in the apparatus 600 may be implemented by hardware, software, firmware, or any combination thereof.

As shown in FIG. 6, the apparatus 600 includes a first interface presenting module 610 configured to present a preview interface for a live streaming room. The apparatus 600 further includes a first interface switching module 620 configured to, in response to a trigger on a first control in the preview interface, switch from the preview interface to the live streaming interface that presents the live streaming room. The apparatus 600 further includes a target function triggering module 630 configured to control a target function associated with the live streaming interface to be triggered, the target function determined based on the first control, the target function indicating an interactive interaction associated with a live streaming content of the live streaming room.

In some embodiments, the apparatus 600 further includes: a first control presenting module configured to present the first control in the preview interface based on a comparison between a viewing duration of the preview interface and a threshold.

In some embodiments, the target function corresponds to a second control in the live streaming interface.

In some embodiments, the first control has a display style corresponding to the second control; and/or a first display position of the first control in the preview interface corresponds to a second display position of the second control in the live streaming interface.

In some embodiments, the first control is presented with a target content, and the target content is used to indicate interaction information in the live streaming room.

In some embodiments, the interaction information includes at least one of the following information of the live streaming room: comment information, like information, or gift information; and/or the target content includes dynamic content, and the dynamic content corresponds to real-time interaction information in the live streaming room.

In some embodiments, the first control includes a first comment control for generating a predetermined comment content.

In some embodiments, the target function triggering module 630 is further configured to present, in the live streaming interface, a comment corresponding to the predetermined comment content.

In some embodiments, the first control includes a second comment control, and the target function triggering module 630 is further configured to present, in the live streaming interface, a comment panel for interacting with the live streaming content.

Embodiments of the present disclosure also provide a corresponding apparatus for implementing the above method or process. FIG. 7 illustrates a schematic structural block diagram of an apparatus 700 for interface interaction according to some embodiments of the present disclosure. The apparatus 700 may be implemented or included in the electronic device 110. The various modules/components in the apparatus 700 may be implemented by hardware, software, firmware, or any combination thereof.

As shown in FIG. 7, the apparatus 700 includes a second interface presenting module 710 configured to present a preview interface for a live streaming room. The apparatus 700 further includes a guidance information presenting module 720 configured to present, based at least on a comparison between a viewing duration of the preview interface and a threshold, the guidance information associated with entering the live streaming room. The apparatus 700 further includes a second interface switching module 730 configured to, in response to not receiving a predetermined operation associated with the guidance information within a preset time period, switch from the preview interface to the live streaming interface that presents the live streaming room.

In some embodiments, the guidance information includes a progress control, the progress control used to indicate a remaining time of the preset time period.

In some embodiments, the guidance information further includes a cancel control, and the apparatus 700 further includes: a switch preventing module configured to, in response to a trigger on the cancel control, stop presenting the guidance information to prevent a switch from the preview interface to the live streaming interface.

In some embodiments, the guidance information presenting module 720 is further configured to, in response to the viewing duration of the preview interface reaching a threshold, present guidance information associated with entering the live streaming room.

In some embodiments, the guidance information includes a first control, and the apparatus 700 further includes: a live streaming interface switching module configured to, in response to a trigger on a first control in the preview interface, switch from the preview interface to a live streaming interface presenting a live streaming room; and a function triggering module configured to control a target function associated with the live streaming interface to be triggered, where the target function is determined based on the first control.

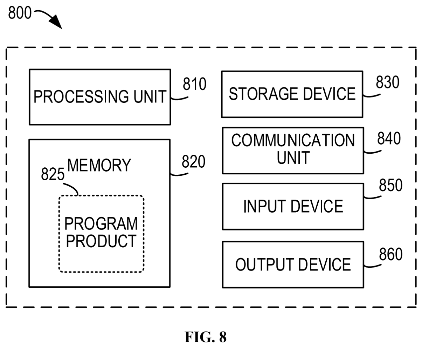

FIG. 8 illustrates a block diagram of an electronic device 800 in which one or more embodiments of the present disclosure may be implemented. It should be understood that the electronic device 800 illustrated in FIG. 8 is merely example and should not constitute any limitation on the function and scope of the embodiments described herein. The electronic device 800 shown in FIG. 8 may be used to implement the electronic device 110 in FIG. 1.

As shown in FIG. 8, the electronic device 800 is in the form of a general-purpose electronic device. Components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and capable of performing various processes according to programs stored in the memory 820. In a multi-processor system, multiple processing units execute computer-executable instructions in parallel to improve parallel processing capability of electronic device 800.

Electronic device 800 typically includes a plurality of computer storage medium. Such medium may be any available medium accessible to the electronic device 800, including, but not limited to, volatile and nonvolatile medium, removable and non-removable medium. The memory 820 may be volatile memory (e.g., register, cache, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, a magnetic disk, or any other medium which may be capable of storing information and/or data (e.g., training data for training) and may be accessed within the electronic device 800.

The electronic device 800 may further include additional removable/non-removable, volatile/nonvolatile storage medium. Although not shown in FIG. 8, a magnetic disk drive for reading or writing from a removable, nonvolatile magnetic disk (e.g., a "a soft disk") and an optical disk drive for reading or writing from a removable, nonvolatile optical disk may be provided. In these cases, each drive may be connected to a bus (not shown) by one or more data medium interfaces. The memory 820 may include a computer program product 825 having one or more program modules configured to perform various methods or actions of various embodiments of the present disclosure.

The communication unit 840 is configured to communicate with another electronic device through a communication medium. Additionally, the function of components of the electronic device 800 may be implemented in a single computing cluster or multiple computing machines capable of communicating over a communication connection. Thus, the electronic device 800 may operate in a networked environment using logical connections with one or more other servers, network personal computers (PCs), or another network node.

The input device 850 may be one or more input devices, such as a mouse, a keyboard, a trackball, or the like. The output device 860 may be one or more output devices, such as a display, a speaker, a printer, or the like. The electronic device 800 may also communicate with one or more external devices (not shown) such as storage devices, display devices, etc. through the communication unit 840 as needed, communicate with one or more devices that enable a user to interact with the electronic device 800, or communicate with any device (e.g., a network card, a modem, etc.) that enables the electronic device 800 to communicate with one or more other electronic devices. Such communication may be performed via an input/output (I/O) interface (not shown).

According to example implementations of the present disclosure, there is provided a computer-readable storage medium having computer-executable instructions stored thereon, where the computer-executable instructions are executed by a processor to implement the method described above. According to example implementations of the present disclosure, there is further provided a computer program product, the computer program product tangibly stored on a non-transitory computer-readable medium and including computer-executable instructions which, when executed by a processor, implement the method described above.

Various aspects of the present disclosure are described herein with reference to flowcharts and/or block diagrams of methods, apparatuses, devices, and computer program products implemented in accordance with the present disclosure. It should be understood that each block of the flowcharts and/or block diagrams and combinations of respective blocks in the flowcharts and/or block diagrams may be implemented by computer-readable program instructions.

These computer-readable program instructions may be provided to a processing unit of a general-purpose computer, a special-purpose computer, or other programmable data processing apparatus to produce a machine, such that the instructions, when executed by a processing unit of a computer or other programmable data processing apparatus, produce means to implement the functions/actions specified in the flowcharts and/or block diagrams. These computer-readable program instructions may also be stored in a computer-readable storage medium, causing a computer, a programmable data processing apparatus, and/or other devices to function in a specific manner, such that the computer-readable medium storing instructions includes a manufactured article including instructions to implement various aspects of the functions/actions specified in one or more blocks of the flowcharts and/or block diagrams.

The computer-readable program instructions may be loaded onto a computer, another programmable data processing apparatus, or another apparatus, such that a series of operational steps are performed on the computer, the other programmable data processing apparatus, or the other apparatus to produce a computerimplemented process so that the instructions executed on the computer, the other programmable data processing apparatus, or the other apparatus implement the functions/actions specified in one or more blocks of the flowcharts and/or block diagrams.

The flowcharts and block diagrams in the drawings show architecture, function, and operation of possible implementations of systems, methods, and computer program products according to multiple implementations of the present disclosure. In this regard, each block in the flowchart or block diagram may represent a module, a piece of program, or a part of instructions that includes one or more executable instructions for implementing specified logical function. In some alternative implementations, the functions noted in the block may also occur in a different order from that noted in the drawings. For example, two consecutive blocks may actually be performed substantially in parallel, or may sometimes be performed in the reverse order, depending on the function involved. It is also noted that each block in the block diagrams and/or flowcharts, as well as combinations of blocks in the block diagrams and/or flowcharts, may be implemented by a dedicated hardware-based system that performs specified functions or actions, or may be implemented by a combination of dedicated hardware and computer instructions.

Various implementations of the present disclosure have been described above, which are example, not exhaustive, and are not limited to the implementations disclosed. Many modifications and variations will be apparent to those of ordinary skilled in the art without departing from the scope and spirit of the respective implementations illustrated. The selection of the terms used herein is intended to optimally explain the principles, practical applications, or improvements to techniques in the marketplace of respective implementations, or to enable other ordinary skilled in the art to understand the various implementations disclosed herein.

## Claims

1. A method for interface interaction, comprising:
presenting a preview interface for a live streaming room;
switching from the preview interface to a live streaming interface that presents the live streaming room in response to a trigger on a first control in the preview interface; and
controlling a target function associated with the live streaming interface to be triggered, the target function determined based on the first control, the target function indicating an interactive interaction associated with a live streaming content of the live streaming room.

2. The method of claim 1, further comprising:
presenting the first control in the preview interface based on a comparison between a viewing duration of the preview interface and a threshold.

3. The method of claim 1, wherein the target function corresponds to a second control in the live streaming interface.

4. The method of claim 3, wherein the first control has a display style corresponding to the second control; and/or
a first display position of the first control in the preview interface corresponds to a second display position of the second control in the live streaming interface.

5. The method of claim 1, wherein the first control is presented with target content, the target content indicating interaction information in the live streaming room.

6. The method of claim 5, wherein the interaction information comprises at least one type of the following information of the live streaming room: comment information, like information, or gift information; and/or
the target content comprises dynamic content, the dynamic content corresponding to real-time interaction information in the live streaming room.

7. The method of claim 1, wherein the first control comprises a first comment control for generating a predetermined comment content.

8. The method of claim 7, wherein controlling the target function associated with the live streaming interface to be triggered comprises:
presenting, in the live streaming interface, a comment corresponding to the predetermined comment content.

9. The method of claim 1, wherein the first control comprises a second comment control and controlling the target function associated with the live streaming interface to be triggered comprises:
presenting, in the live streaming interface, a comment panel for interacting with the live streaming content.

10. A method for interface interaction, comprising:
presenting a preview interface for a live streaming room;
presenting guidance information associated with entering the live streaming room, based at least on a comparison between a viewing duration of the preview interface and a threshold; and
switching from the preview interface to a live streaming interface that presents the live streaming room in response to not receiving a predetermined operation associated with the guidance information within a preset time period.

11. The method of claim 10, wherein the guidance information comprises a progress control, the progress control used to indicate a remaining time of the preset time period.

12. The method of claim 10, wherein the guidance information further comprises a cancel control, and the method further comprises:
in response to a trigger on the cancel control, stopping presenting the guidance information to prevent a switch from the preview interface to the live streaming interface.

13. The method of claim 10, wherein presenting the guidance information associated with entering the live streaming room comprises:
in response to the viewing duration of the preview interface reaching the threshold, presenting the guidance information associated with entering the live streaming room.

14. The method of claim 10, wherein the guidance information comprises a first control, and the method further comprising:
switching from the preview interface to the live streaming interface that presents the live streaming room in response to a trigger on the first control in the preview interface; and
controlling a target function associated with the live streaming interface to be triggered, the target function determined based on the first control.

15. An apparatus for interface interaction, comprising:
a first interface presenting module configured to present a preview interface for a live streaming room;
a first interface switching module configured to switch from the preview interface to a live streaming interface that presents the live streaming room in response to a trigger on a first control in the preview interface; and
a target function triggering module configured to control a target function associated with the live streaming interface to be triggered, the target function determined based on the first control, the target function indicating an interactive interaction associated with a live streaming content of the live streaming room.

16. An apparatus for interface interaction, comprising:
a second interface presenting module configured to present a preview interface for a live streaming room;
a guidance information presenting module configured to present guidance information associated with entering the live streaming room, based at least on a comparison between a viewing duration of the preview interface and a threshold; and
a second interface switching module configured to switch from the preview interface to a live streaming interface that presents the live streaming room in response to not receiving a predetermined operation associated with the guidance information within a preset time period.

17. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 9 or claims 10 to 14.

18. A computer-readable storage medium having stored thereon a computer program which, when executed by a processor, implements the method of any of claims 1 to 9 or claims 10 to 14.
